(19) Europäisches Patentamt
European Patent Office
Office européen des brevets

(11) **EP 2 382 443 B1**

(12) **EUROPÄISCHE PATENTSCHRIFT**

(45) Veröffentlichungstag und Bekanntmachung des Hinweises auf die Patenterteilung:
**01.02.2017 Patentblatt 2017/05**

(51) Int Cl.:
**G01B 11/275** (2006.01)

(21) Anmeldenummer: **09748090.9**

(22) Anmeldetag: **29.10.2009**

(86) Internationale Anmeldenummer:
**PCT/EP2009/064254**

(87) Internationale Veröffentlichungsnummer:
**WO 2010/076054 (08.07.2010 Gazette 2010/27)**

(54) **VERFAHREN ZUR FAHRWERKSVERMESSUNG SOWIE VORRICHTUNG ZUM VERMESSEN DER FAHRWERKSGEOMETRIE EINES FAHRZEUGS**

METHOD FOR MEASURING A CHASSIS AND DEVICE FOR MEASURING THE CHASSIS GEOMETRY OF A MOTOR VEHICLE

PROCÉDÉ DE MESURAGE D'UN CHÂSSIS ET DISPOSITIF DE MESURAGE DE LA GÉOMÉTRIE D'UN CHÂSSIS D'UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.12.2008 DE 102008055163**

(43) Veröffentlichungstag der Anmeldung:
**02.11.2011 Patentblatt 2011/44**

(73) Patentinhaber: **Robert Bosch GmbH**
**70442 Stuttgart (DE)**

(72) Erfinder:
• **NOBIS, Guenter**
**72622 Nuertingen (DE)**
• **ABRAHAM, Steffen**
**31134 Hildesheim (DE)**
• **UFFENKAMP, Volker**
**71642 Ludwigsburg (DE)**

(56) Entgegenhaltungen:
WO-A1-2008/028832    DE-A1-102008 054 975
US-A- 4 854 702      US-A- 6 134 792
US-A1- 2004 039 544

EP 2 382 443 B1

**Beschreibung**

Die Erfindung betrifft ein Verfahren zur Fahrwerksvermessung sowie eine Vorrichtung zum Vermessen der Fahrwerksgeometrie eines Fahrzeugs.

Stand der Technik

Aus der DE 107 57 763, der WO 2008/028832 A1 und der EP 1 042 643 B1 ist eine Vorrichtung zum Bestimmen der Rad- und/oder Achsgeometrie von Kraftfahrzeugen mittels einer optischen Messeinrichtung mit mindestens zwei Bildaufnahmeeinrichtungen bekannt. Dabei handelt es sich um ein sogenanntes Stereomesssystem mit binokularen (Stereo-) Bildaufnahmeeinrichtungen. Solche binokularen Bildaufnahmeeinrichtungen sind aufwändig und teuer.

Bei anderen Achsmesssysteme, wie sie beispielsweise aus der US 613 47 92 bekannt sind, kommen Messtargets mit Passpunktfeldern zum Einsatz, die mit hoher Präzision hergestellt werden müssen und daher ebenfalls teuer sind. Des Weiteren können solche hoch präzisen Messtargets im Werkstattalltag leicht beschädigt oder deformiert werden, was zu unkontrollierbaren Messfehlern führt.

Weiter Achsvermessungssysteme zur Bestimmung der Rad- und/oder Achsgeometrie werden in der US 2004/039544 A1, US 4 854 702 A und der DE 10 2008 054975 A1 gezeigt.

Offenbarung der Erfindung

Es ist daher eine Aufgabe der vorliegenden Erfindung, ein zuverlässiges, kostengünstiges und genaue Messwerte lieferndes Achsvermessungsverfahren sowie eine zugehörige Achsvermessungsvorrichtung zur Verfügung zu stellen.

Diese Aufgabe wird durch den Gegenstand der unabhängigen Patentansprüche gelöst. Vorteilhafte Weiterbildungen ergeben sich aus den abhängigen Patentansprüchen.

Bei einem erfindungsgemäßen Verfahren zur Fahrwerksvermessung wird zunächst ein Fahrwerksvermessungssystem mit vier in bekannter Position zueinander angeordneten Messköpfen bereitgestellt, von denen jeder eine monokulare Bildaufnahmeeinrichtung umfasst. Die relative Position der Messköpfe zueinander ist bekannt, und der Abstand der vorderen Messköpfe zueinander ist verschieden zu dem Abstand der hinteren Messköpfe zueinander. Dabei sind die vorderen und hinteren Messköpfe so an dem Messplatz angeordnet, dass sie in der Lage sind, jeweils eine Bildaufnahme eines gegenüberliegenden Rads eines auf dem Messplatz stehenden Kraftfahrzeugs zu machen.

Dann wird zunächst jeweils ein Vorderrad oder ein daran angebrachtes Messtarget in mindestens einer Einfahrlage des Fahrzeugs durch die hinteren Messköpfe aufgenommen. Anschließend wird das Kraftfahrzeug in eine erste und danach mindestens in eine zweite Hauptvermessungslage bewegt, und die vier Räder oder die daran angebrachten Messtargets werden mit jedem der vier Messköpfe aufgenommen.

Durch Ausführen von lokalen 3D-Rekonstruktionen mit lokalem Maßstab können die Translationsvektoren, die Rotationsvektoren, die Raddrehwinkel zwischen den Einfahrlagen und den Hauptvermessungslagen sowie die Raddrehzentren und die Radachsen der Räder anhand der aufgenommenen Bilder der Räder oder der daran angebrachten Messtargets bestimmt werden. Es findet eine lokale 3D-Rekonstruktion der Einfahrvermessung und der Hauptvermessung statt.

Aus den Messungen der Vorderräder oder der daran angebrachten Messtargets in den Einfahrlagen und in den Hauptvermessungslagen sowie aus der der Differenz der Abstände zwischen den vorderen Bildaufnahmeeinrichtungen und den hinteren Bildaufnahmeeinrichtungen lässt sich ein globaler Maßstab für die Messköpfe bestimmen, bspw. aus dem Abgleich der Fahrbewegung bzw. der Verschiebungswege. Die vier lokalen Maßstäbe der Hauptvermessung werden auf einen gemeinsamen, lokalen Maßstab über einen Abgleich der Fahrbewegung bzw. der Verschiebungswege abgeglichen.

Der globale Maßstab der Hauptvermessung wird auf die 3D-Rekonstruktion der Einfahrvermessung über die Prämisse "identische Geometrie" übertragen, weil die gemeinsame Fahrbewegung die Einfahrvermessung nicht mit einschließt. Der absolute Maßstab wird beispielsweise über die nachfolgend aufgeführte Differenzformel eingeführt.

Daraus können schließlich die Fahrwerksvermessungsparameter des Fahrzeugs, insbesondere Sturz, Einzel- und/oder Gesamtspur bestimmt werden.

Eine erfindungsgemäße Vorrichtung zum Vermessen der Fahrwerksgeometrie eines Fahrzeugs umfasst eine Anordnung von vier in bekannter Position zueinander angeordneten Messköpfen, von denen jeder eine monokulare Bildaufnahmeeinrichtung der oben beschriebenen Art aufweist. Die erfindungsgemäße Vorrichtung umfasst ferner eine Auswerteeinrichtung, die eingerichtet ist, im Betrieb aus den Aufnahmen der Räder oder der daran angebrachten Messtargets in einer ersten und mindestens einer zweiten Hauptvermessungslage des Fahrzeugs mit jedem der vier Messköpfe die Translationsvektoren, die Rotationsvektoren und die Raddrehwinkel zwischen diesen Lagen sowie die Raddrehachsen der Räder durch Ausführen von lokalen 3D-Rekonstruktionen zu bestimmen, sowie aus den Messungen der Vorderräder oder der daran angebrachten Messtargets in den Einfahr- und und Hauptvermessungslagen einen globalen Maßstab für die Messköpfe zu bestimmen und daraus die Fahrwerksvermessungsparameter des Fahrzeugs, insbesondere Sturz, Einzel- und/oder Gesamtspur zu bestimmen.

An den Rädern oder an den Targets vorhandene Geometriedetails werden erfindungsgemäß mit monokularen Bildaufnahmevorrichtungen erfasst, die Erfassung der Vorderräder bzw. der daran angebrachten Targets erfolgt dabei in wenigstens einer Einfahrlage und in wenigstens zwei Hauptvermessungslagen, und die Erfassung der Hinterräder bzw. der daran angebrachten Targets erfolgt gleichzeitig in den mindestens zwei Hauptvermessungslagen.

Bei allen erfindungsgemäßen Verfahren und Vorrichtungen ergeben sich Kostenvorteile, da eine hochgenaue Fertigung von optischen Targets nicht notwendig ist, da auf eine zweite Bildaufnahmeeinrichtung für jeden Messkopf verzichtet werden kann und da ein Abstandsmesssensor nicht benötigt wird.

Die erfindungsgemäßen Verfahren und Vorrichtungen können sowohl mit Messtargets als auch ohne Messtargets verwirklicht werden.

Falls keine Messtargets zum Einsatz kommen, sondern die Räder selbst betrachtet werden, so werden natürliche Geometriedetails der Räder, wie beispielsweise eine Felgenkante, ein Ventil, ein Designelement oder ein Schriftzeichen auf der Reifenwand betrachtet.

Falls Messtargets zum Einsatz kommen, so benötigen diese kein Passpunktfeld, dadurch sind die Messtargets deutlich günstiger herstellbar, und unkontrollierbare Messfehler in Folge von Deformation oder Beschädigung von Präzisionstargets mit Passpunktfeldern im Werkstattalltag können zuverlässig vermieden werden.

Des Weiteren sind die erfindungsgemäßen Verfahren einfach durchführbar und die zugehörigen Vorrichtungen einfach bedienbar. Wenn Targets zum Einsatz kommen, ist eine genaue Positionierung der Radadapter von solchen Targets zur Drehachse nicht notwendig.

Die Auswertung der monokularen Bildfolgen von wenigstens zwei Bildern des betreffenden Rads bzw. des daran angebrachten Messtargets zur Bestimmung geometrischer Größen erfolgt mittels bekannter Verfahren aus der Bildbearbeitung gemäß dem Prinzip "structure from motion" und mittels deren Anwendung für die dreidimensionale Fahrwerksvermessung.

Aus den in allen aufgenommenen Bildern gemessenen 2D-Bildkoordinaten der abgebildeten Geometriedetails ergeben sich deren 3D-Koordinaten in einem lokalen Rad-Koordinatensystem, die Translations- und Rotationsvektoren des Fahrzeugs und die Drehwinkel des Rades zwischen den Lagen sowie die zur Achsvermessung erforderlichen Informationen in Form von 3D-Position des Drehzentrums und räumlichen Richtung der Drehachse. Dieser Berechnungsschritt wird nachfolgend als 3D-Rekonstruktion bezeichnet. Dieser ist dem Fachmann bekannt und braucht hier nicht weiter erläutert zu werden.

Nach erfolgter 3D-Rekonstruktion bilden die Positionen der Geometriedetails im Rad-Koordinatensystem ein Passpunktsystem, so dass nachfolgende Messungen bei stehendem Fahrzeug zum Beispiel zur Einstellung von Spur und Sturz bei erkannter Fehlstellung des Rades durchgeführt werden können. Die 3D-Rekonstruktion bestimmt lediglich die Form des Rad-Koordinatensystems, nicht dessen Maßstab. Jede monokulare Bildaufnahmevorrichtung berechnet ihr zugehöriges Rad-Koordinatensystem mit einem lokalen Maßstab, der bei der Rekonstruktion beliebig vorgegeben wird.

Für diejenigen Messwerte der Achsvermessung, die im Wesentlichen auf der Berechnung von Winkeln beruhen, müssen die Maßstäbe aller Bildaufnahmevorrichtungen weder identisch noch absolut bekannt sein. Erst wenn zusätzlich metrische Messwerte zu bestimmen sind oder die Einzelspur der Hinterräder, müssen die lokalen Maßstäbe aufeinander angepasst werden. Im Folgenden wird ein für alle Bildaufnahmevorrichtungen gemeinsamer Maßstab als globaler Maßstab bezeichnet. Durch Einführung einer zusätzlichen, maßhaltigen, externen Information wird der globale Maßstab auf einen absoluten Maßstab angepasst.

Unter dem lokalen Maßstab wird nachfolgend ein beliebig eingeführter Maßstab einer 3D-Rekonstruktion eines Rades verstanden, unter dem globaler Maßstab ein gemeinsamer Maßstab für alle vier Rekonstruktionen durch Abgleich der Fahrbewegung, und unter dem absoluten Maßstab die Einführung einer maßhaltigen, externen Information zur Korrektur des globalen Maßstabs. In der vorliegenden Erfindung ergibt sich der absolute Maßstab aus den beiden Abständen dHA und dVA beispielsweise über die nachfolgend genannte Formel.

Gemäß einer ersten Ausführungsform der Erfindung wird der absolute Maßstab aus dem Verhältnis der aus den lokalen 3D-Rekonstruktionen erhaltenen Differenz der errechneten Spurweite der Vorderachse bei Messung in der Einfahrlage und der errechneten Spurweite der Vorderachse bei Messung in der Hauptvermessungslage zum bekannten Abstand der Messköpfe bestimmt. Als Spurweite bezeichnet man den Abstand zwischen dem rechten und dem linken Rad einer Achse, gemessen von Reifenmitte zu Reifenmitte. Insbesondere kann ein Korrekturfaktor für die Umrechung des globalen in den absolute Maßstab gemäß der folgenden Formel bestimmt werden:

$$s = \frac{wHA_{3D} - wVA_{3D}}{dVA - dHA}$$

Dabei stellen dVA und dHA den Abstand in Fahrzeugquerrichtung zwischen den vorderen Bildaufnahmeeinrichtungen und den hinteren Bildaufnahmeeinrichtungen dar, wie sie in der Auswerteeinrichtung als Sollwerte gespeichert sind. Die Größen $wVA_{3D}$ und $wHA_{3D}$ stellen die aus der 3D-Rekonstruktion unter Verwendung des globalen Maßstabes ermittelten Spurweiten der Vorderachse des Fahrzeuges bei Messung mit den vorderen Bildaufnahmeeinrichtungen und den hinteren Bildaufnahmeeinrichtungen in Fahrzeugquerrichtung dar.

Gemäß einer weiteren Ausführungsform der Erfindung erfolgen die Aufnahmen der Messköpfe in den Einfahr- und Hauptvermessungslagen während der Vorwärtsbewegung des Fahrzeugs, ohne dass dieses zwischendurch angehalten wird. Dadurch ergibt sich eine zügige und benutzerfreundliche Durchführung des erfindungsgemäßen Fahrwerksvermessungsverfahrens.

Gemäß einer weiteren Ausführungsform der Erfindung werden bei den Aufnahmen in den Einfahr- und Hauptvermessungslagen jeweils Bildfolgen aus mehreren Bildern aufgenommen. Dadurch lässt sich die Genauigkeit der erhaltenen Fahrwerksvermessungsparameter des Fahrzeugs noch weiter erhöhen.

Gemäß weiteren Ausführungsformen der Erfindung erfolgen die Aufnahmen der Räder oder der daran angebrachten Messtargets durch die Messköpfe synchron, oder mit der gleichen Messfrequenz, oder die Zeitabstände zwischen den Bildaufnahmen sind genau bekannt.

Es kann auch ein Abgleich einer Bewegungsstrecke erfolgen. Dabei werden Messdaten mit nicht synchronisierten Kameras einer gemeinsamen 3D-Rekonstruktion zugeführt werden, wenn mindestens ein Translationsvektor bekannt ist. Wenn sich das Fahrzeug nicht kontinuierlich bewegt, sondern an mindestens zwei Lagen angehalten wird, beispielsweise am Anfang und am Ende der Bildfolge, und wenn alle Kameras mindestens ein Bild der stillstehenden Räder erfasst, so können die Translationsvektoren im jeweiligen lokalen 3D-Koordinatensystem der Bildaufnahmeeinrichtungen so skaliert werden, dass wenigstens ein Translationsvektor in allen vier Bildaufnahmeeinrichtungen die gleiche Länge hat.

Es ist auch möglich das Bewegungsprofil abzugleichen. Dabei werden die Messdaten von nicht synchronisierten Kameras einer gemeinsamen 3D-Rekonstruktion zugeführt, wenn die Bewegung des Fahrzeugs mit nicht konstanter Geschwindigkeit erfolgt. Wenn sich das Fahrzeug beschleunigt oder verzögert, kann aus den Messdaten jeder Bildaufnahmeeinrichtung ein Bewegungsprofil erzeugt werden. Die Skalierung für eine gemeinsame 3D-Rekonstruktion ergibt sich aus der Anpassung der Bewegungsprofile.

Dabei kann der Maßstab nur für eine Bildaufnahmeeinrichtung eingeführt werden und auf die anderen Kameras übertragen werden. Das Fahrzeug bewegt sich als starrer Körper und wird von allen Bildaufnahmeeinrichtungen beobachtet. Die Bewegungsinformation des Fahrzeugs wird genutzt, um die vier unbekannten Maßstabsfaktoren in den lokalen 3D-Rekonstruktionen der vier Messköpfe auf einen einzigen gemeinsamen Maßstabsfaktor zu reduzieren. Die Maßstäbe in allen vier Messköpfen sind dann identisch. Über die Einführung des globalen Maßstabs einer Bildaufnahmeeinrichtung können die Messwerte aller Kameras im globalen Maßstab definiert werden.

Bei einer zeitlich synchronen Bildaufnahme in allen vier Bildaufnahmeeinrichtungen ist unmittelbar eine gemeinsame 3D-Rekonstruktion möglich. Die Translationsvektoren werden im jeweiligen lokalen 3D-Koordinatensystem der Bildaufnahmeeinrichtung so skaliert, dass alle vier Bildaufnahmeeinrichtungen die gleiche Länge haben.

Die Erfindung wird im Folgenden anhand von Ausführungsbeispielen mit Bezug auf die beiliegenden Figuren im Einzelnen beschrieben.

Fig. 1    zeigt eine schematische Darstellung einer erfindungsgemäßen Vorrichtung zum Vermessen der Fahrwerksgeometrie eines Fahrzeugs sowie eines Fahrzeugs in einer Einfahrlage EFP und in einer Hauptmesslage HMP von oben;

Fig. 2    zeigt schematisch die 3D-Rekonstruktion einer Achsgeometrie ohne globalen Maßstab.

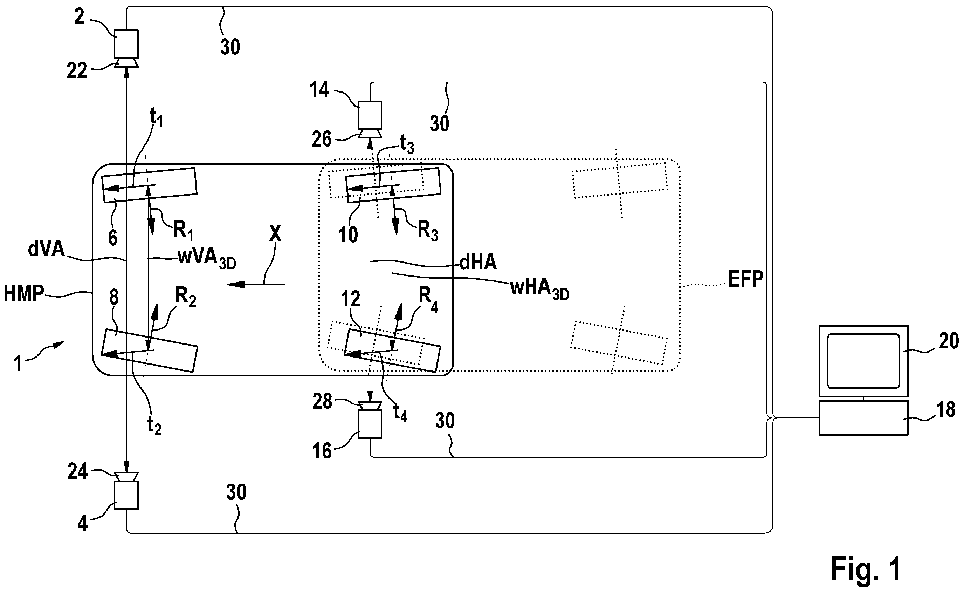

Fig. 1 zeigt eine schematische Darstellung einer erfindungsgemäßen Vorrichtung zum Vermessen der Fahrwerksgeometrie eines Fahrzeugs 1 sowie eines Fahrzeugs 1 in einer Einfahrlage und in einer Hauptmesslage von oben.

Die Vorrichtung weist vier Messköpfe 2, 4, 14, 16 auf, die jeweils paarweise einander gegenüberliegend auf beiden Seiten eines Fahrzeugs 1 angeordnet sind. Die Messköpfe 2, 4, 14, 16 weisen auf ihrer dem Fahrzeug 1 zugewandten Seite je eine monokulare Bildaufnahmeeinrichtung 22, 24, 26, 28 auf, die z. B. als Kamera ausgestaltet ist. Die Position der Messköpfe 2, 4, 14, 16 im Koordinatensystem des Messplatzes ist bekannt und wird während der Messung nicht verändert.

Die vorderen Messköpfe 2 und 4 sind dabei in einem Abstand dVA in Fahrzeugquerrichtung zueinander angeordnet, und die hinteren Messköpfe 14 und 16 sind in einem Abstand dHA in Fahrzeugquerrichtung zueinander angeordnet. Der Abstand dVA der vorderen Messköpfe 2 und 4 ist dabei deutlich größer als der Abstand dHA der hinteren Messköpfe 14 und 16. Um erfindungsgemäß den globalen Maßstab bestimmen zu können, kommt es darauf an, dass der Abstand der vorderen Messköpfe 2 und 4 zueinander unterschiedlich zu dem Abstand der hinteren Messköpfe 14 und 16 zueinander ist, wobei, anders als im vorliegenden Ausführungsbeispiel, selbstverständlich auch der Abstand der hinteren Messköpfe 14 und 16 größer als der Abstand der vorderen Messköpfe 2 und 4 zueinander sein kann.

Die Messköpfe 2, 4, 14, 16 sind über Datenleitungen 30 mit einer Auswerteeinrichtung 18 zum Auswerten der von den Messköpfen 2, 4, 14, 16 aufgenommenen und ermittelten Daten verbunden. Die Auswerteeinrichtung 18 ist mit einer Anzeige 20 zum Anzeigen der Ergebnisse der Messung verbunden. Weiterhin ist die Auswerteeinrichtung 18 mit einer in der Figur 1 nicht gezeigten Eingabevorrichtung, z.B. einer Tastatur zum Steuern der Auswerteeinrichtung 18 versehen.

In Fig. 1 ist das Fahrzeug 1 mit seinen vier Rädern 6, 8, 10, 12 in einer mit gestrichelten Linien dargestellten Einfahrlage EFP und in einer mit durchgezogenen Linien dargestellten Hauptvermessungslage HMP dargestellt. In der Einfahrlage EFP befinden sich die Vorderräder 6 und 8 im Blickfeld der Bildaufnahmeeinrichtungen 26 und 28 der hinteren Messkameras 14 und 16. In der Hauptvermessungslage HMP befinden sich die Vorderräder 6 und 8 im Blickfeld der Bildaufnahmeeinrichtungen 22 und 24 der vorderen Messköpfe 2 und 4, und die Hinterräder 10 und 12 befinden sich im Blickfeld der Bildaufnahmeeinrichtungen 26 und 28 der hinteren Messköpfe 14 und 16.

Zur Durchführung der Messung wird das Fahrzeug 1 in den Messplatz bewegt. Während dieser Bewegung erfasst die rechte hintere Bildaufnahmeeinrichtung 26 eine Bildfolge 1 des Vorderrads 6, und die Bildaufnahmeeinrichtung 16 erfasst eine Bildfolge 2 des linken Vorderrads 8. Eine Einfahrlage EFP während der Erfassung dieser Bildfolgen 1 und 2 ist in Fig. 1 beispielhaft dargestellt.

Anschließend werden die Vorderräder 6 und 8 durch das Blickfeld der vorderen Bildaufnahmeeinrichtungen 22 und 24 bewegt, die vordere rechte Bildaufnahmeeinrichtung 22 erfasst eine Bildfolge 3 des rechten Vorderrads 6 und die linke vordere Bildaufnahmeeinrichtung 24 erfasst eine Bildfolge 4 des linken Vorderrads 8. Des Weiteren erfasst die hintere rechte Bildaufnahmeeinrichtung 26 eine Bildfolge 5 des rechten Hinterrads 10, und die linke hintere Bildaufnahmeeinrichtung 28 erfasst eine Bildfolge 6 des linken Hinterrads 12. Eine Hauptvermessungslage HMP während der Erfassung dieser Bildfolgen 3, 4, 5 und 6 ist in Fig. 1 beispielhaft dargestellt.

Im vorliegenden Ausführungsbeispiel erfolgen die Erfassung der Bildfolgen 1 und 2 und die Erfassung der Bildfolgen 3 bis 6 jeweils synchron. Alternativ dazu ist es auch möglich, solche Bildfolgen wie oben beschrieben mit gleicher Messfrequenz, mit genau bekannten Zeitabständen zwischen den Bildaufnahmen, durch einen Abgleich einer Bewegungsstrecke oder durch einen Abgleich des Bewegungsprofils zu erfassen.

Nun erfolgt eine 3D-Rekonstruktion und Bewegungsbestimmung aus den nun vorliegenden sechs Bildfolgen. Die 3D-Rekonstruktion der Geometriedetails aus den Bildfolgen 3 bis 6 wird, wie oben beschrieben, über die Fahrzeugbewegung maßstabsmäßig aufeinander angepasst.

Betrachtet man das Fahrzeug 1 als starren Körper, so müssen die 3D-Koordinaten der Geometriedetails aus der Auswertung der Bildfolge 1 und 2 in einem lokalen Koordinatensystem des Fahrzeugs 1 oder der Vorderräder 6 und 8 maßstabsmäßig identisch zu den 3D-Koordinaten aus der Auswertung der Bildfolgen 3 und 4 sein. Der Maßstab kann somit auch auf die Bildfolgen 1 und 2 übertragen werden. Alternativ gilt das auch für die Spurweite als Abstand der Drehzentren zur Vorderachse.

Aus den Messungen der Vorderachse mit den Bildfolgen 1 und 2 sowie 3 und 4 lässt sich nun der fehlende absolute Maßstab ermitteln. Dazu wird unter Verwendung des globalen Maßstabes die Spurweite $wVA_{3D}$ der Vorderachse bei Messung in der Einfahrlage $wHA_{3D}$ und bei Messung in der Haupmesslage $wVA_{3D}$ bestimmt. Bei korrektem absoluten Maßstab müssen beide Spurweiten gleich groß sein. Der Korrekturfaktor s zwischem globalem und absolutem Maßstab ergibt sich aus dem Verhältnis der Spurweitendifferenz zur tatsächlichen bekannten Differenz der Abstände zwischen den Bildaufnahmeeinrichtungen, wie er in der Auswerteeinrichtung hinterlegt ist, beispielsweise anhand der folgenden Formel:

$$s = \frac{wHA_{3D} - wVA_{3D}}{dVA - dHA}$$

Es wird also unter Verwendung des globalen Maßstabes die Spurweite der Vorderachse bei Messung mit dem vorderen Messsystem errechnet. Diese ist entsprechend des Fehlers des absoluten Maßstabs fehlerbehaftet.

Unter Verwendung der 3D-Rekonstruktion der Punkte auf dem Rad und des globalen Maßstabes wird also die Spurweite der Vorderachse aus den Messungen des Fahrzeuges in Einfahrposition, d.h. aus den Messungen des hinteren Messsystems errechnet. Wenn der globale Maßstab korrekt wäre, d.h. gleich dem absoluten Maßstab, dann sind beide errechneten Spurweiten gleich, d.h. $wVA_{3D}=wHA_{3D}$. Wenn nicht, lässt sich aus der Differenz eine Korrektur s für den Maßstabsfaktor errechnen.

Die Geometriedetails können natürliche Geometriedetails des Rades 6, 8, 10, 12, wie z. B. eine Felgenkante, ein Ventil, ein Design-Element oder Schriftzeichen oder ein auf dem Rad 6, 8, 10, 12 aufgebrachtes Messtarget sein. Durch das Verwenden natürlicher Geometriedetails kann der Schritt des Aufbringens und späteren Abnehmens von Messtargets eingespart werden, so dass die Messung schneller durchgeführt werden kann. Andererseits weisen Messtargets einen hohen Kontrast auf und sind daher von den Bildaufnahmeeinrichtungen 22, 24, 26, 28 besonders gut zu erkennen. Messtargets ermöglichen so insbesondere auch bei schlechten Lichtverhältnissen eine genaue Fahrwerksvermessung.

Da es sich bei den Bildaufnahmeeinrichtungen 22, 24, 26, 28 um monokulare Bildaufnahmeeinrichtungen 22, 24, 26, 28 handelt, kann die Position der Geometriedetails im dreidimensionalen Koordinatensystem des jeweiligen Messkopfes 2, 4, 14, 16 nur bis auf einen unbekannten Maßstabsfaktor zwischen lokalem und absolutem Maßstab bestimmt werden, beziehungsweise zwischen globalem und absolutem Maßstab, wenn die lokalen Maßstäbe aneinander angepasst wurden.

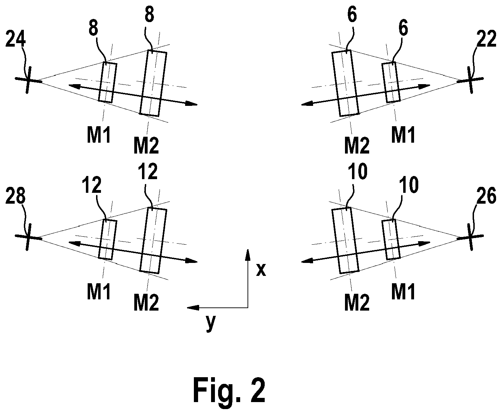

Fig. 2 zeigt schematisch die 3D-Rekonstruktion einer Achsgeometrie ohne globalen Maßstab und veranschaulicht diese Maßstabsunsicherheit beispielhaft.

In Figur 2 ist eine 3D-Rekonstruktion der Räder 6, 8, 10, 12 für zwei beispielhafte Maßstäbe M1 und M2 dargestellt. Aus der Figur 2 wird deutlich, dass eine Änderung des Maßstabs zu einer Skalierung aller Streckenlängen um den gleichen Faktor führt. Die Abbildung eines großen, entfernten Objektes, hier der Räder 6, 8, 10, 12 mit dem Maßstab M2, ist identisch mit den maßstäblich verkleinerten Räder 6, 8, 10, 12 mit dem Maßstab M1, die sich in geringerer Entfernung von der jeweiligen Bildaufnahmeeinrichtung 22, 24, 26, 28 befinden.

Aus der Differenz der Geometriedetails in den Bildern aus zwei Hauptvermessungslagen HMP des Fahrzeugs 1 und der Formulierung einer dreidimensionalen Bewegung eines starren Körpers zwischen den zwei Lagen unter Einführung der Drehzentren, der Drehachsen und der Drehwinkel der Räder können nun die Translationsvektoren t1, t2, t3 und t4 und die Rotationsvektoren R1, R2, R3 und R4 der Räder 6, 8, 10, 12 bestimmt werden. Dies kann entweder durch eine Logik im jeweiligen Messkopf 2, 4, 14, 16 oder in der Auswerteeinrichtung 18 erfolgen.

Da das Fahrzeug 1 für diese Messung als starrer Körper anzusehen ist, verändert sich die relative Position der Räder 6, 8, 10, 12 zueinander nicht, wenn das Fahrzeug 1 bewegt wird. Die Translationsvektoren t1, t2, t3 und t4 der Räder 6, 8, 10, 12 müssen daher im globalen Koordinatensystem die gleiche Länge aufweisen. Daher können die vier lokalen Maßstäbe der Messköpfe 2, 4, 14, 16 auf einen gemeinsamen, globalen Maßstab reduziert werden, indem die Translationsvektoren t1, t2, t3 und t4, so skaliert werden, dass sie die gleiche Länge aufweisen.

Zum Skalieren der Translationsvektoren t1, t2, t3 und t4 und zum Anpassen auf einen gemeinsamen Maßstab muss die Erfassung aller vier Räder 6, 8, 10, 12 durch die Bildaufnahmeeinrichtungen 22, 24, 26, 28 der Messköpfe 2, 4, 14,16 zeitlich synchronisiert werden, damit die vier Räder 6, 8, 10, 12 jeweils in der gleichen Lage des Fahrzeugs 1 erfasst werden.

In der einfachsten Variante wird das Fahrzeug 1 wie zuvor beschrieben in wenigstens zwei Lagen, z. B. in zwei Hauptvermessungslagen, angehalten und die Positionen der Geometriedetails werden in diesen beiden Lagen des Fahrzeugs 1 bestimmt. Eine zusätzliche zeitliche Synchronisation der Bildaufnahmezeitpunkte ist dann nicht erforderlich. Das Fahrzeug 1 kann auch in weiteren Lagen angehalten werden, um die Positionen der Geometriedetails in diesen Lagen zu bestimmen und die Genauigkeit der Messung zu erhöhen.

Aus den gemessenen Daten können mittels bekannten Verfahren die Drehachse und das Drehzentrum der Räder 6, 8, 10, 12 im Koordinatensystem des jeweiligen Messkopfes 2, 4, 14, 16 bestimmt werden.

Diese Auswertung kann radweise, d.h. getrennt für alle vier Räder 6, 8, 10, 12, achsweise, d.h. gemeinsame für die gegenüberliegenden Räder 6, 8, 10, 12 einer Achse oder gemeinsam für alle Räder 6, 8, 10, 12 erfolgen. Für die achsweise Auswertung und die gemeinsame Auswertung aller Räder 6, 8, 10, 12 muss eine zeitliche Synchronität der Aufnahmen hergestellt werden.

Zusätzlich zu den Geometriedetails der Räder 6, 8, 10, 12 können Geometriedetails auf der Karosserie des Fahrzeugs 1 erfasst werden, um Lenk- und Federbewegungen des Fahrzeugs 1 zu erfassen und mathematisch zu kompensieren.

Wie beschrieben, sind die 3D-Koordinaten jedes Meßkopfes nur bis auf einen Maßstabsfaktor bestimmbar, d.h. die Form der rekonstruierten 3D-Punktwolke ist bekannt, nicht jedoch ihre Größe (siehe Fig. 2). Ein gemeinsamer Maßstab wird aus dem Abgleich der Translationsvektoren t1, t2, t3 und t4 erhalten, welche die Bewegung der Geometriedetails im Raum beschreiben.

Aus Figur 2 ist jedoch erkennbar, dass die Skalierung auf einen gemeinsamen Maßstab zu keiner Änderung der Winkel zwischen den Strecken führt. Daher sind diese Winkel, wie z. B. der Sturz der Räder 6, 8, 10, 12, die Einzelspur der Vorderachse sowie die Gesamtspur der Vorder- und Hinterachse unabhängig vom globalen Maßstab und damit ohne Kenntnis des gemeinsamen Maßstabs bestimmbar.

Messgrößen, die Streckenlängen erfordern, hängen dagegen vom gemeinsamen, absoluten Maßstab ab. Dies betrifft z. B. die Berechnung des Radstandes und der Spurweite oder der Fahrzeuglängsmittelebene M, die für die Berechnung der Einzelspur der Hinterachse benötigt wird.

## Patentansprüche

1.   Verfahren zur Fahrwerksvermessung mit den folgenden Schritten:

Bereitstellen eines Fahrwerksvermessungssystems mit vier in bekannter Position zueinander angeordneten Messköpfen (2, 4, 14, 16), von denen jeder eine monokulare Bildaufnahmeeinrichtung (22, 24, 26, 28) aufweist, wobei die relative Position der Messköpfe (2, 4, 14, 16) zueinander bekannt ist und wobei sich der Abstand (dVA) der vorderen Messköpfe (2, 4) zueinander von dem Abstand (dHA) der hinteren Messköpfe (14, 16) zueinander unterscheidet;

Aufnehmen jeweils eines Vorderrades (6, 8) oder eines daran angebrachten Messtargets in mindestens einer Einfahrlage des Fahrzeugs (1) mit den hinteren Messköpfen (14, 16);

Aufnehmen der vier Räder (6, 8, 10, 12) oder der daran angebrachten Messtargets mit jedem der vier Messköpfe (2, 4, 14, 16) in einer ersten Hauptvermessungslage und in mindestens einer zweiten Hauptvermessungslage des Fahrzeugs (1);

Ausführen von lokalen 3D-Rekonstruktionen mit lokalem Maßstab zum Bestimmen der Translationsvektoren (t1, t2, t3, t4), der Rotationsvektoren (R1, R2, R3, R4) und der Raddrehwinkel zwischen diesen Lagen sowie der Raddrehzentren und der Raddrehachsen der Räder (6, 8, 10, 12) aus den aufgenommenen Bildern der Räder (6, 8, 10, 12) oder der daran angebrachten Messtargets;
Anpassung der vier lokalen Maßstäbe der Hauptvermessunglagen auf einen gemeinsamen, globalen Maßstab durch Abgleich der Fahrzeugbewegung;
Übertragung des globalen Maßstabs auf die 3D-Rekonstruktion der Einfahrmessungslagen über Abgleich der identischen Geometrie der Vorderachse;
Bestimmen eines absoluten Maßstabs für die Messköpfe (2, 4, 14, 16) aus den Messungen der Vorderräder (6, 8) oder der daran angebrachten Messtargets in den Einfahrlagen und in den Hauptvermessungslagen, sowie aus der Differenz der Abstände zwischen den vorderen Bildaufnahmeeinrichtungen und den hinteren Bildaufnahmeeinrichtungen, wobei diese Differenz bekannt ist; und
Bestimmen der Fahrwerksvermessungsparameter des Fahrzeugs (1), insbesondere Sturz, Einzel- und/oder Gesamtspur.

2. Verfahren nach Anspruch 1, wobei der absolute Maßstab aus dem Verhältnis der aus den lokalen 3D-Rekonstruktionen errrechneten Spurweiten zum bekannten Abstand der Messköpfe (2, 4, 14, 16) bestimmt wird.

3. Verfahren nach Anspruch 1 oder 2, wobei die Aufnahmen der Messköpfe (2, 4, 14, 16) in den Einfahrlagen und in den Hauptvermessungslagen während der Bewegung des Fahrzeugs erfolgen.

4. Verfahren nach einem der Ansprüche 1 bis 3, wobei bei den Aufnahmen der hinteren Messköpfe (14, 16) in den Einfahrlagen des Fahrzeugs (1) jeweils Bildfolgen aus mehreren Bildern der Vorderräder (6, 8) oder der daran angebrachten Messtargets aufgenommen werden und wobei bei den Aufnahmen der Messköpfe (2, 4, 14, 16) in den Hauptvermessungslagen des Fahrzeugs (1) jeweils Bildfolgen aus mehreren Bildern der Räder (6, 8) oder der daran angebrachten Messtargets aufgenommen werden.

5. Verfahren nach einem der Ansprüche 1 bis 4, wobei die Aufnahmen der Räder (6, 8) oder der daran angebrachten Messtargets durch die Messköpfe (2, 4, 14, 16) synchron erfolgt.

6. Verfahren nach einem der Ansprüche 1 bis 4, wobei die Messköpfe (2, 4, 14, 16) die Aufnahmen mit der gleichen Messfrequenz tätigen oder die Zeitabstände zwischen zwei Bildaufnahmen bekannt sind.

7. Vorrichtung zum Vermessen der Fahrwerksgeometrie eines Fahrzeugs (1), aufweisend:

eine Anordnung von vier in bekannter Position zueinander angeordneten Messköpfen (2, 4, 14, 16), von denen jeder eine monokulare Bildaufnahmeeinrichtung (22, 24, 26, 28) aufweist, die eingerichtet sind, im Betrieb ein Bild jeweils eines Rades (6, 8, 10, 12) oder eines daran angebrachten Messtargets des Fahrzeugs (1) zu erfassen, wobei die relative Position der Messköpfe (2, 4, 14, 16) zueinander bekannt ist und wobei sich der Abstand (dVA) der vorderen Messköpfe (2, 4) zueinander von dem Abstand (dHA) der hinteren Messköpfe (14, 16) zueinander unterscheidet; und
eine Auswerteeinrichtung (18), die eingerichtet ist, im Betrieb aus den Aufnahmen der Vorderräder (6, 8) oder der daran angebrachten Messtargets in einer ersten Einfahrlage (EFP) und in einer zweiten Einfahrlage (EFP) des Fahrzeugs (1) mit jedem der zwei hinteren Messköpfe (14, 16) die Translationsvektoren (t1, t2) und die Rotationsvektoren (R1, R2) der Räder (6, 8), die Raddrehwinkel zwischen den Einfahrlagen sowie die Raddrehzentren und die Raddrehachsen der Räder (6, 8) zu bestimmen;
aus den Aufnahmen der Räder (6, 8, 10, 12) oder der daran angebrachten Messtargets in einer ersten Hauptvermessungslage (HMP) und in einer zweiten Hauptvermessungslage (HMP) des Fahrzeugs (1) mit jedem der vier Messköpfe (2, 4, 14, 16) die Translationsvektoren (t1, t2, t3, t4) und die Rotationsvektoren (R1, R2, R3, R4) der Räder (6, 8, 10, 12), die Raddrehwinkel zwischen den Hauptvermessungslagen sowie die Raddrehzentren und die Raddrehachsen der Räder (6, 8, 10, 12) zu bestimmen;
aus den Messungen der Vorderräder (6, 8) oder der daran angebrachten Messtargets in den Einfahrlagen (EFP) und in den Hauptvermessungslagen (HMP), sowie aus der der Differenz der Abstände zwischen den vorderen Bildaufnahmeeinrichtungen und den hinteren Bildaufnahmeeinrichtungen einen absoluten Maßstab für die Messköpfe (2, 4, 14, 16) zu bestimmen, wobei diese Differenz bekannt ist; und
die Fahrwerksvermessungsparameter des Fahrzeugs (1), insbesondere Sturz, Einzel- und/oder Gesamtspur zu bestimmen.

8. Vorrichtung nach Anspruch 7, wobei die Auswerteeinrichtung (18) weiterhin so eingerichtet ist, im Betrieb den absoluten Maßstab aus dem Verhältnis der aus den lokalen 3D-Rekonstruktionen errechneten Spurweiten zum bekannten Abstand der Messköpfe (2, 4, 14, 16) zu bestimmen.

9. Vorrichtung nach Anspruch 7 oder 8, wobei der Abstand (dVA) der vorderen Messköpfe (2, 4) größer ist als der Abstand (dHA) der hinteren Messköpfe (14, 16) zueinander.

10. Vorrichtung nach Anspruch 7 oder 8, wobei der Abstand (dVA) der vorderen Messköpfe (2, 4) kleiner ist als der Abstand (dHA) der hinteren Messköpfe (14, 16) zueinander.

**Claims**

1. Method for measuring a chassis, comprising the following steps:

   providing a chassis measurement system comprising four measurement heads (2, 4, 14, 16) arranged at a known position in relation to one another, each of said measurement heads having a monocular image recording device (22, 24, 26, 28), wherein the relative position of the measurement heads (2, 4, 14, 16) in relation to one another is known and wherein the distance (dVA) between the front measurement heads (2, 4) differs from the distance (dHA) between the rear measurement heads (14, 16);
   in each case recording a front wheel (6, 8) or a measurement target attached thereon using the rear measurement heads (14, 16) in at least one driven-in position of the vehicle (1);
   recording the four wheels (6, 8, 10, 12) or the measurement targets attached thereon using each one of the four measurement heads (2, 4, 14, 16) in a first principal measurement position and in at least one second principal measurement position of the vehicle (1) ;
   carrying out local 3D reconstructions with a local scale for determining the translation vectors (t1, t2, t3, t4), the rotation vectors (R1, R2, R3, R4) and the wheel rotation angles between these positions and the wheel rotation centres and the wheel axes of the wheels (6, 8, 10, 12) from the recorded images of the wheels (6, 8, 10, 12) or the measurement targets applied thereon;
   adapting the four local scales of the principal measurement positions to a common, global scale by comparing the vehicle movement;
   transferring the global scale to the 3D reconstruction of the driven-in measurement positions by comparing the identical geometry of the front axis;
   determining an absolute scale for the measurement heads (2, 4, 14, 16) from the measurements of the front wheels (6, 8) or the measurement targets attached thereon in the driven-in positions and in the principal measurement positions, and from the difference in the distances between the front image recording devices and the rear image recording devices, wherein this difference is known; and
determining the chassis measurement parameters of the vehicle (1), in particular camber, individual and/or overall toe angle.

2. Method according to Claim 1, wherein the absolute scale is determined from the ratio between the track widths calculated from the local 3D reconstructions and the known distance between the measurement heads (2, 4, 14, 16).

3. Method according to Claim 1 or 2, wherein the recordings from the measurement heads (2, 4, 14, 16) are made in the driven-in positions and in the principal measurement positions during the movement of the vehicle.

4. Method according to one of Claims 1 to 3, wherein, in the recordings of the rear measurement heads (14, 16) in the driven-in positions of the vehicle (1), image sequences made of a plurality of images of the front wheels (6, 8) or the measurement targets applied thereon are recorded in each case and wherein, in the recordings of the measurement heads (2, 4, 14, 16) in the principal measurement positions of the vehicle (1), image sequences made of a plurality of images of the wheels (6, 8) or the measurement targets applied thereon are recorded in each case.

5. Method according to one of Claims 1 to 4, wherein the recordings of the wheels (6, 8) or the measurement targets applied thereon are made synchronously by the measurement heads (2, 4, 14, 16).

6. Method according to one of Claims 1 to 4, wherein the measurement heads (2, 4, 14, 16) make recordings with the same measurement frequencies or the time intervals between two image recordings are known.

7. Apparatus for measuring the chassis geometry of a vehicle (1), comprising:

   an arrangement of four measurement heads (2, 4, 14, 16) arranged with a known position in relation to one another, each of which has a monocular image recording device (22, 24, 26, 28) configured to capture an image of one wheel (6, 8, 10, 12) or a measurement target applied thereon of the vehicle (1) in each case during operation, wherein the relative position of the measurement heads (2, 4, 14, 16) in relation to one another is known and wherein the distance (dVA) between the front measurement heads (2, 4) differs from the distance (dHA) between the rear measurement heads (14, 16); and
an evaluation device (18), configured during operation to determine the translation vectors (t1, t2) and the rotation vectors (R1, R2) of the wheels (6, 8), the wheel rotation angles between the driven-in positions and the wheel rotation centres and the wheel axes of the wheels (6, 8) from the recordings of the front wheels (6, 8) or the measurement targets applied thereon using each one of the two rear measurement heads (14, 16) in a first driven-in position (EFP) and in a second driven-in position (EFP) of the vehicle (1);
to determine the translation vectors (t1, t2, t3, t4) and the rotation vectors (R1, R2, R3, R4) of the wheels (6, 8, 10, 12), the wheel rotation angles between the principal measurement positions and the wheel rotation centres and the wheel axes of the wheels (6, 8, 10, 12) from the recordings of the wheels (6, 8, 10, 12) or the measurement targets applied thereon using each one of the four measurement heads (2, 4, 14, 16) in a first principal measurement position (HMP) and in a second principal measurement position (HMP) of the vehicle (1);
to determine an absolute scale for the measurement heads (2, 4, 14, 16) from the measurements of the front wheels (6, 8) or the measurement targets applied thereon in the driven-in positions (EFP) and in the principal measurement positions (HMP) and from the difference in the distances between the front image recording devices and the rear image recording devices, wherein this difference is known; and
to determine the chassis measurement parameters of the vehicle (1), in particular camber, individual and/or overall toe angle.

8. Apparatus according to Claim 7, wherein the evaluation device (18) is further configured so as to determine the absolute scale during operation from the ratio between the track widths calculated from the local 3D reconstructions and the known distance between the measurement heads (2, 4, 14, 16).

9. Apparatus according to Claim 7 or 8, wherein the distance (dVA) between the front measurement heads (2, 4) is greater than the distance (dHA) between the rear measurement heads (14, 16).

10. Apparatus according to Claim 7 or 8, wherein the distance (dVA) between the front measurement heads (2, 4) is less than the distance (dHA) between the rear measurement heads (14, 16).

**Revendications**

1. Procédé de mesurage de châssis comprenant les étapes suivantes :

   mise à disposition d'un système de mesurage de châssis doté de quatre têtes de mesure (2, 4, 14, 16) disposées dans des positions connues les unes par rapport aux autres, dont chacune d'elles possède un appareil de capture d'image (22, 24, 26, 28) monoculaire, la position relative des têtes de mesure (2, 4, 14, 16) les unes par rapport aux autres étant connue et l'écart (dVA) entre les têtes de mesure avant (2, 4) entre elles étant différent de l'écart (dHA) entre les têtes de mesure arrière (14, 16) entre elles ;
   capture respective d'une roue avant (6, 8) ou d'une cible de mesure montée sur celle-ci dans au moins une position d'approche du véhicule (1) avec les têtes de mesure arrière (14, 16) ;
   capture des quatre roues (6, 8, 10, 12) ou des cibles de mesure montées sur celles-ci avec chacune des quatre têtes de mesure (2, 4, 14, 16) dans une première position de mesurage principale et dans au moins une deuxième position de mesurage principale du véhicule (1) ;
   exécution de reconstructions 3D locales avec une échelle locale en vue de déterminer les vecteurs de translation (t1, t2, t3, t4), les vecteurs de rotation (R1, R2, R3, R4) et l'angle de pivotement de roues entre ces positions ainsi que les centres de pivotement de roue et les axes de pivotement de roue des roues (6, 8, 10, 12) à partir des images capturées des roues (6, 8, 10, 12) ou des cibles de mesure montées sur celles-ci ;
   adaptation des quatre échelles locales des positions de mesurage principales à une échelle commune globale par compensation du mouvement du véhicule ;
   transfert de l'échelle globale sur la reconstruction 3D des positions de mesure d'approche par compensation de la géométrie identique de l'essieu avant ;
   détermination d'une échelle absolue pour les têtes de mesure (2, 4, 14, 16) à partir des mesures des roues avant (6, 8) ou des cibles de mesure montées sur celles-ci dans les positions d'approche et dans les positions de mesurage principales, ainsi qu'à partir de la différence des écarts entre les appareils de capture d'image avant et les appareils de capture d'image arrière, cette différence étant connue ; et
   détermination des paramètres de mesurage du châssis du véhicule (1), notamment l'inclinaison latérale, la voie individuelle et/ou globale.

2. Procédé selon la revendication 1, l'échelle absolue étant déterminée à partir du rapport des écartements des voies calculés à partir des reconstructions 3D locales et l'écart connu des têtes de mesure (2, 4, 14, 16).

3. Procédé selon la revendication 1 ou 2, les captures des têtes de mesure (2, 4, 14, 16) dans les positions d'approche et dans les positions de mesurage principales étant effectuées pendant le mouvement du véhicule.

4. Procédé selon l'une des revendications 1 à 3, des séquences d'images composées de plusieurs images des roues avant (6, 8) ou des cibles de mesure montées sur celles-ci étant respectivement capturées lors des captures des têtes de mesure arrière (14, 16) dans les positions d'approche du véhicule (1) et des séquences d'images composées de plusieurs images des roues (6, 8) ou des cibles de mesure montées sur celles-ci étant respectivement capturées lors des captures des têtes de mesure (2, 4, 14, 16) dans les positions de mesurage principales du véhicule (1).

5. Procédé selon l'une des revendications 1 à 4, les captures des roues (6, 8) ou des cibles de mesure montées sur celles-ci par les têtes de mesure (2, 4, 14, 16) s'effectuant de manière synchrone.

6. Procédé selon l'une des revendications 1 à 4, les têtes de mesure (2, 4, 14, 16) effectuant les captures avec la même fréquence de mesure ou les intervalles de temps entre deux captures d'image étant connus.

7. Dispositif de mesurage de la géométrie du châssis d'un véhicule (1), comprenant :

un arrangement de quatre têtes de mesure (2, 4, 14, 16) disposées dans des positions connues les unes par rapport aux autres, dont chacune d'elles possède un appareil de capture d'image (22, 24, 26, 28) monoculaire qui est conçu pour, en fonctionnement, capturer une image respectivement d'une roue (6, 8, 10, 12) ou d'une cible de mesure montée sur celle-ci du véhicule (1), la position relative des têtes de mesure (2, 4, 14, 16) les unes par rapport aux autres étant connue et l'écart (dVA) entre les têtes de mesure avant (2, 4) entre elles étant différent de l'écart (dHA) entre les têtes de mesure arrière (14, 16) entre elles ; et un appareil d'interprétation (18) qui est conçu pour, en fonctionnement, à partir des captures des roues avant (6, 8) ou des cibles de mesure montées sur celles-ci dans une première position d'approche (EFP) et dans une deuxième position d'approche (EFP) du véhicule (1) avec chacune des deux têtes de mesure arrière (14, 16), déterminer les vecteurs de translation (t1, t2) et les vecteurs de rotation (R1, R2) des roues (6, 8), les angles de pivotement de roue entre les positions d'approche ainsi que les centres de pivotement de roue et les axes de pivotement de roue des roues (6, 8) ; à partir des captures des roues (6, 8, 10, 12) ou des cibles de mesure montées sur celles-ci dans une première position de mesurage principale (HMP) et dans une deuxième position de mesurage principale (HMP) du véhicule (1), avec chacune des quatre têtes de mesure (2, 4, 14, 16), déterminer les vecteurs de translation (t1, t2, t3, t4) et les vecteurs de rotation (R1, R2, R3, R4) des roues (6, 8, 10, 12), les angles de pivotement de roues entre les positions de mesurage principales ainsi que les centres de pivotement de roue et les axes de pivotement de roue des roues (6, 8, 10, 12) ; à partir des mesures des roues avant (6, 8) ou des cibles de mesure montées sur celles-ci dans les positions d'approche (EFP) et dans les positions de mesurage principales (HMP), ainsi qu'à partir de la différence des écarts entre les appareils de capture d'image avant et les appareils de capture d'image arrière, déterminer une échelle absolue pour les têtes de mesure (2, 4, 14, 16), cette différence étant connue ; et déterminer les paramètres de mesurage du châssis du véhicule (1), notamment l'inclinaison latérale, la voie individuelle et/ou globale.

8. Dispositif selon la revendication 7, l'appareil d'interprétation (18) étant en outre conçu pour, en fonctionnement, déterminer l'échelle absolue à partir du rapport des écartements des voies calculés à partir des reconstructions 3D locales et l'écart connu des têtes de mesure (2, 4, 14, 16).

9. Dispositif selon la revendication 7 ou 8, l'écart (dVA) entre les têtes de mesure avant (2, 4) étant supérieur à l'écart (dHA) entre les têtes de mesure arrière (14, 16) entre elles.

10. Dispositif selon la revendication 7 ou 8, l'écart (dVA) entre les têtes de mesure avant (2, 4) étant inférieur à l'écart (dHA) entre les têtes de mesure arrière (14, 16) entre elles.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10757763
- WO 2008028832 A1
- EP 1042643 B1
- US 6134792 A
- US 2004039544 A1
- US 4854702 A
- DE 102008054975 A1